# FASCICULE DE BREVET EUROPEEN

(11) **EP 1 462 690 B1**
(45) Date de publication et mention de la délivrance du brevet: **18.01.2006**
(21) Numéro de dépôt: 03100812.1
(22) Date de dépôt: 28.03.2003
(51) Int. Cl.: F16K 1/30

(54) **Soupape pour récipient de gaz**
Ventil für Gasbehälter
Valve for gas container

(43) Date de publication de la demande: 29.09.2004
(73) Titulaire: LUXEMBOURG PATENT COMPANY S.A., 7440 Lintgen (LU)
(72) Inventeur: Kremer, Paul, 7263 Walferdange (LU); Schmit, Jacques, 8268 Mamer (LU)
(74) Mandataire: Weydert, Robert

(56) Documents cités:
- DE-C- 803 872
- DE-C- 896 139
- FR-A- 1 370 110
- FR-A- 2 816 387
- FR-A- 2 817 940

## Description

L'invention concerne un robinet pour cylindre de gaz ou de liquide selon le préambule de la revendication 1.

Le document DE-C-803 872 décrit un robinet conforme au préambule de la revendication 1.

Le robinet précité est vissé dans le trou d'accès du cylindre de gaz ou de liquide. Une partie du robinet est donc reçue dans le trou d'accès du cylindre alors qu'une autre partie du robinet pourvue du volant de commande s'étend du trou d'accès vers l'extérieur du cylindre. En cas d'accident des forces de cisaillement peuvent être appliquées à la partie du robinet s'étendant du trou d'accès, ces forces pouvant sectionner ou trancher le corps du robinet approximativement à l'endroit où il s'étend vers l'extérieur du trou d'accès. Lorsque le robinet est ainsi tranché par ces forces de cisaillement la partie du robinet pourvue de la vanne pour ouvrir ou fermer le robinet est séparée de la partie de l'embase du robinet restant engagée dans le trou d'accès du cylindre de gaz ou de liquide. En cas de perte de cette vanne le contenu du cylindre peut s'échapper, ce qui est dangereux en particulier si le cylindre renferme des gaz ou des liquides toxiques.

La présente invention a pour objet de fournir un robinet du type précité avec un simple moyen pour assurer la fermeture étanche du cylindre lorsque le corps du robinet est tranché par des forces de cisaillement en cas d'accident et la partie du robinet avec la vanne ouverte/fermée est séparée de la partie de l'embase du robinet engagée dans le trou d'accès du cylindre.

Pour résoudre cet objet de l'invention le robinet du type précité est caractérisé en ce que l'embase est pourvue d'une partie à diamètre extérieur réduit s'étendant entre le filet externe de l'embase et son extrémité libre, et en ce que le clapet de retenue secondaire se trouve à l'extrémité libre de la partie à diamètre réduit de l'embase.

Lorsque l'ensemble de la vanne est séparé de l'embase du robinet, le clapet de retenue secondaire maintient la fermeture étanche du cylindre et un dispositif auxiliaire peut être attaché à l'embase du robinet restant vissée dans le cylindre en vue d'ouvrir le clapet et de vider le cylindre de son contenu. De préférence, à cet effet, un passage interne du corps du robinet est pourvu dans l'embase d'un filetage interne pour l'engagement d'un tel dispositif de vidange auxiliaire.

Le clapet de retenue est de préférence formé par une bille de retenue maintenue par un ressort en engagement étanche avec un siège prévu à l'extrémité libre de l'embase du corps du robinet, ce ressort prenant appui sur un support porté par un manchon attaché à l'embase. De préférence le ressort est un ressort hélicoïdal conique.

La tige de commande peut être pourvue d'une tige de prolongement s'étendant du siège mobile de la vanne du robinet jusqu'à la bille du clapet de retenue. Dans la position fermée de la vanne du robinet, l'extrémité de la tige de prolongement se trouvant à proximité de la bille du clapet de retenue, mais écartée d'une faible distance de cette bille du clapet de retenue.

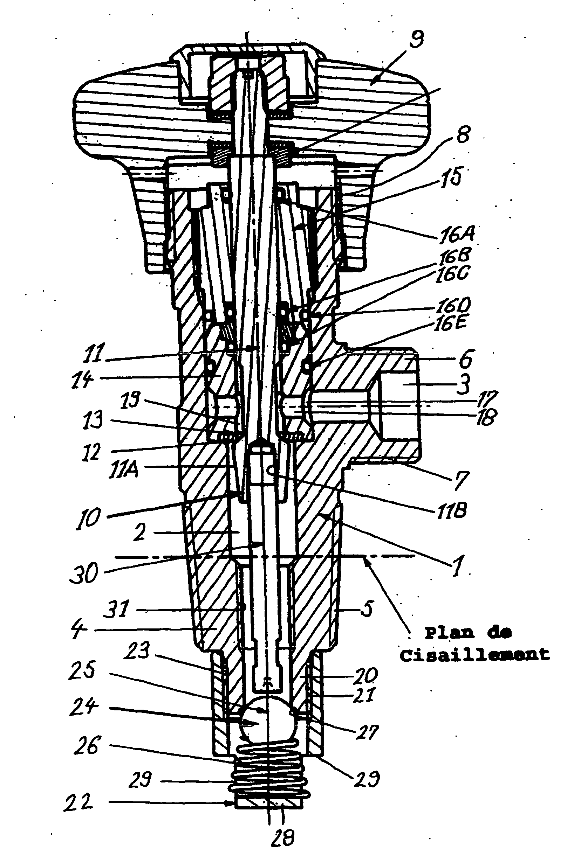

L'invention sera maintenant expliquée en plus grand détail en référence au dessin annexé, sur lequel la figure unique représente le robinet selon l'invention en coupe longitudinale.

Comme représenté dans la figure, le robinet comporte un corps 1 pourvu d'un passage 2 à différents diamètres qui traverse le corps 1 longitudinalement, et d'un passage latéral 3 qui communique avec le passage longitudinal 2 entre les extrémités opposées du corps 1 du robinet. Le corps 1 du robinet est pourvu d'une embase 4 servant à la fixation du robinet à un cylindre de gaz ou de liquide (non-représenté). Cette embase 4 est pourvue d'un filetage conique externe 5 en-dessous d'un raccord latéral 6 par lequel le passage latéral 3 s'étend et qui est aussi pourvu d'un filetage externe 7. A l'extrémité opposée de l'embase 4, c'est-à-dire à l'extrémité supérieure de la figure annexée, le corps du robinet 1 est aussi pourvu d'un filetage externe 8 qui est engagé par un filetage interne d'un volant 9 pour actionner une vanne principale 10 en vue de l'ouvrir ou de la fermer au moyen d'une tige longitudinale 11 qui s'étend en haut au-delà de l'extrémité supérieure du corps 1 et à laquelle de volant de commande 9 est attachée en vue de tourner la tige 11 par rotation du volant 9.

La vanne 10 du robinet comporte un siège mobile 12 formé sur la tige de commande 11 par une surface conique orientée vers l'extrémité supérieure du corps 1 du robinet, et une bague de siège stationnaire 13 entourant la tige 11 et retenue en position par une pièce annulaire 14 disposée dans un contre-alésage du passage longitudinal 2 autour de la tige 11 et retenue en position par une étoupe 15 vissée dans cet contre-alésage du passage longitudinal 2 au-dessus de la pièce annulaire 14. Pour assurer l'étanchéité, des joints toriques 16A-16B sont prévus, c'est-à-dire les joints toriques 16A et 16B entre l'étoupe 15 et la tige 11, le joint torique 16C entre la pièce annulaire 14 et la tige 11, le joint torique 16D entre l'étoupe 15 et le corps 1 du robinet, et le joint torique 16C entre la pièce annulaire 14 et le corps 1 du robinet.

Le passage latéral 30 est en communication avec une rainure annulaire 17 formée dans la surface externe de la pièce annulaire 14. Cette rainure annulaire 17 est de son tour en communication par un ou plusieurs trous radiaux 18 avec un passage annulaire 19 formé entre le diamètre interne de la pièce annulaire 14 et le diamètre externe de la tige 11 au-dessus de la surface de siège 12 de la tige 11. Pour former ce passage annulaire 19 la tige 11 a au-dessus de la surface de siège 12 une partie à diamètre réduit.

La vanne 10 du robinet est une vanne à siège inversé, c'est-à-dire une vanne à ouvrir par déplacement de la tige longitudinale 11 vers le bas par rapport à la bague de siège stationnaire 13, c'est-à-dire par le déplacement de la tige 11 vers l'embase 4 du robinet. La surface conique formant siège 12 de la tige de commande 11, comme décrit ci-haut, est donc orientée vers le volant 9 ou vers l'extrémité supérieure du corps 1 du robinet et engage le côté inférieur de la bague de siège stationnaire 13 ou le côté de la bague de siège 13 tourné vers l'embase 4 du corps 1 du robinet dans la position fermée de la vanne. En d'autres mots, l'engagement entre la tige 11 et le siège 13 se fait sur le côté de la bague éloignée du volant 9, contrairement à une vanne normale, non-inversée, dans laquelle l'engagement aurait lieu sur le côté de la bague de siège tourné vers le volant.

L'embase 4 du robinet est pourvue à son extrémité libre d'une partie à diamètre réduit 20 pourvue d'un filetage externe 21. Un manchon 22 ayant un filetage interne 23 est vissé sur le filetage externe 21 de la partie à diamètre réduit 20. A l'intérieur de ce manchon 22 se trouve un clapet de retenue secondaire 24 pourvu d'une bille 25 qui est sollicitée par un ressort hélicoïdal conique 26 en vue de l'engager de façon étanche avec une surface de siège stationnaire 27 prévue à l'extrémité inférieure de la partie à diamètre réduit 20 de l'embase 4 du corps 1 du robinet. Le ressort hélicoïdal 26 s'appuie sur un support 28 formé l'extrémité inférieure du manchon 22. Deux fenêtres ou découpes 29 sont prévues à l'extrémité inférieure du manchon 22, sur ses deux côtés, en vue de placer l'intérieur du manchon en communication avec l'espace externe qui l'entoure.

La tige longitudinale 11 a en bas de la surface de siège 12 une partie à diamètre agrandi 11A pourvue d'un trou central axial 11B dans lequel l'extrémité supérieure d'une tige de prolongement 30 est fixée. La tige de prolongement 30 s'étend de la tige 11 verticalement vers le bas et son extrémité inférieure se trouve en une faible distance de la bille 25 du clapet 24 dans la position fermée de la vanne principale 10. La tige 11 et la tige de prolongement 30 s'étendent coaxialement dans le passage longitudinal 2 avec un espace annulaire libre formé entre la surface du passage longitudinal 2 et la tige de prolongement 30 et aussi entre la surface du passage longitudinal et la partie à diamètre agrandi 11A de la tige de commande 11.

Dans la position fermée de la vanne principale 10 le ressort hélicoïdal 26 maintient la bille 25 du clapet de retenue secondaire 24 également en position fermée. Lorsque le volant 2 est tourné en vue d'ouvrir la vanne principale 10 les tiges 11 et 30 sont déplacées vers le bas, ouvrant d'abord la vanne principale 10 par dégagement de la surface de siège 12 de la tige 11 de la bague de siège stationnaire 13 et causant ensuite par la tige de prolongement 30 l'ouverture du clapet de retenue secondaire 24 par le dégagement de la bille 25 de son siège 27.

En cas d'accident une force de cisaillement peut être appliquée à la partie supérieure du robinet et le corps 1 du robinet peut être tranché en un plan de cisaillement se trouvant approximativement à l'endroit où le corps 1 s'étend du trou d'accès (non-représenté) du cylindre de gaz ou de liquide (non-représenté). Tout l'ensemble du robinet formant la vanne principale 10 peut donc être séparé d'une partie de l'embase 4 qui reste engagée dans le trou d'accès du cylindre de gaz ou de liquide. Malgré la perte de la partie supérieure du robinet avec la vanne principale 10, la fermeture étanche du cylindre de gaz ou de liquide est maintenue par le clapet de retenue secondaire 24, c'est-à-dire la bille 25 est maintenue en engagement étanche avec son siège 27 par l'effet du ressort hélicoïdal 26. Pour permettre l'ouverture de ce clapet 25 après que le corps 1 du robinet a été ainsi tranché et la vanne principale 10 n'est plus utilisable pour ouvrir le clapet de retenue 24, l'embase 4 est pourvue dans le passage longitudinal 2 d'un filetage interne 31 dans lequel un dispositif auxiliaire (non-représenté) peut être vissé en vue de l'ouverture du clapet secondaire 24.

L'invention n'est pas limitée au mode d'exécution particulier qui vient d'être décrit ci-avant mais beaucoup de modifications peuvent y être apportées par les spécialistes sans pour autant quitter le cadre de l'invention, tel que défini par les revendications annexées.

## Revendications

1. Robinet pour cylindre de gaz ou de liquide, en particulier d'un véhicule, tel qu'une remorque, comportant un corps de robinet (1) ayant une embase (4) pourvue d'une partie ayant un filet externe (5) servant à la fixation du robinet audit cylindre,
une vanne principale (10) comportant une tige de commande (11) montée dans le corps du robinet (1) pour ouvrir ou fermer la vanne principale (10), cette vanne principale (10) étant une vanne à siège inversé, à ouvrir par déplacement axial de la tige de commande (11) en direction vers l'embase (4), la vanne principale (10) se trouvant dans le corps du robinet (1) en un endroit éloigné de l'embase (4) et sur un côté de l'embase (4) opposé à une extrémité libre de celle-ci, le corps du robinet (1) étant susceptible d'être sectionné par cisaillement en cas d'accident dans un plan situé entre ladite vanne principale (10) et l'extrémité libre de l'embase (4), laissant au moins une partie de cette embase (4) engagée dans un trou d'accès à l'intérieur du cylindre,
l'embase (4) étant pourvue d'un clapet de retenue secondaire (24) normalement fermé et la tige de commande (11) ayant un prolongement s'étendant par un passage de gaz ou de liquide du robinet vers le clapet secondaire (24) en vue de l'ouvrir lors de l'ouverture de la vanne principale (10),
**caractérisé en ce que** l'embase (4) est pourvue d'une partie à diamètre extérieur réduit (20) s'étendant entre le filet externe (5) de l'embase (4) et son extrémité libre, et **en ce que** le clapet de retenue secondaire (24) se trouve à l'extrémité libre de la partie à diamètre réduit (20) de l'embase (4).

2. Robinet selon la revendication 1, **caractérisé en ce que** le passage du corps du robinet est pourvu dans la partie de l'embase (4) restant dans le trou d'accès du cylindre lorsque le corps du robinet (1) est sectionné par cisaillement, d'une partie filetée interne: (31) pour la fixation d'un moyen auxiliaire pour l'ouverture du clapet de retenue (24).

3. Robinet selon la revendication 1 ou 2, **caractérisé en ce que** le clapet de retenue secondaire (24) comporte une bille de retenue (25) sollicitée par un ressort (26) vers un siège (27) formé à l'extrémité libre de l'embase (4) du corps de robinet (1) et s'appuyant sur un support (28) solidaire d'un manchon (24) fixé à ladite partie à diamètre réduit (20) de l'embase (4) du corps du robinet (1).

4. Robinet selon l'une quelconque des revendications 1 à 3, **caractérisé en ce que** le prolongement de la tige de commande (11) est formée par une tige de prolongement (30) attachée à une partie de la tige de commande (11) formant le siège inversé mobile de la vanne principale (10).

## Patentansprüche

1. Ventil für Gas oder Flüssigkeitsbehälter, insbesondere eines Fahrzeuges, wie z.B. eines Anhängers, mit einem Ventilkörper (1), der einen ein Aussengewinde (5) aufweisenden Fussansatz (4) besitzt zur Befestigung des Ventils an dem Behälter,
einem Hauptventil (10) mit einer in dem Ventilkörper (1) getragenen Betätigungsspindel (11) zum Öffnen oder Schliessen des Hauptventils (10), wobei dieses Hauptventil (10) ein Ventil mit umgekehrten Sitz ist, das durch axiale Bewegung der Betätigungsspindel (11) in Richtung zu dem Fussansatz (4) zu öffnen ist, und wobei das Hauptventil (10) sich in dem Ventilkörper (1) in einer von dem Fussansatz (4) entfernten Stelle und auf einer dem freien Ende des Fussansatzes (4) gegenüberliegenden Seite angeordnet ist, und wobei der Ventilkörper (4) im Falle eines Unfalles in einer Ebene durch Abscheren durchtrennbar ist, die sich zwischen dem Hauptventil (10) und dem freien Ende des Fussansatzes (4) befindet, unter Zurücklassung mindestens eines Teiles dieses Fussansatzes (4) in einer Zugangsbohrung zum Innern des Behälters,
wobei der Fussansatz (4) mit einem normalerweise geschlossenen, sekundären Rückschlagventil (24) versehen ist und die Betätigungsspindel (11) eine Verlängerung aufweist, die sich durch einen Gas- oder Flüssigkeitsdurchlass des Ventils zu dem sekundären Rückschlagventil (24) erstreckt, um es beim Öffnen des Hauptventils (10) zu öffnen,
**dadurch gekennzeichnet, dass** der Fussansatz (4) einen Teil (20) aufweist mit verringertem Aussendurchmesser zwischen dem Aussengewinde (5) des Fussansatzes (4) und seinem freien Ende, und dass das sekundäre Rückschlagventil (24) sich am freien Ende des Teiles (20) mit verringertem Durchmesser des Fussansatzes (4) befindet.

2. Ventil nach Anspruch 1, **dadurch gekennzeichnet, dass** der Durchlass des Ventilkörpers in dem Teil des Fussansatzes (4), der nach dem Durchtrennen durch Abscheren des Ventilkörpers (1) in der Zugangsbohrung des Behälters zurückbleibt, mit einem inneren Gewindeabschnitt (31) versehen ist zum Anschliessen eines Hilfsmittels, um das Rückschlagventil (24) zu öffnen.

3. Ventil nach Anspruch 1 oder 2, **dadurch gekennzeichnet, dass** das sekundäre Rückschlagventil (24) eine Rückschlagkugel (25) aufweist, die durch eine Feder (26) gegen einen Sitz (27) vorgespannt ist, der sich am freien Ende des Fussansatzes (4) des Ventilkörpers (1) befindet, und die Feder (26) sich auf einer Stütze (28) abstützt, welche mit einer Hülse (22) verbunden ist, die an dem Teil (20) mit verringertem Durchmesser des Fussansatzes (4) des Ventilkörpers (1) befestigt ist.

4. Ventil nach einem der Ansprüche 1 bis 3, **dadurch gekennzeichnet, dass** die Verlängerung der Betätigungsspindel (11) durch eine Verlängerungsstange (30) gebildet ist, die an einem Teil der Betätigungsspindel (11) befestigt ist, der den umgekehrten, beweglichen Sitz des Hauptventils (10) aufweist.

## Claims

1. Tap for a gas or liquid cylinder, particularly of a vehicle, such as a trailer, comprising a tap body (1) having a root section (4) provided with a portion having an external thread (5) serving for the attachment of the tap to said cylinder,
a main valve (10) comprising an actuating stem (11) mounted in the tap body (1) for opening or closing the main valve (10), said main valve (10) being an inversed seat valve to be opened by axial displacement of the actuating stem (11) in direction towards the root section (4), the main valve (10) being located in the tap body (1) at a location spaced from the root section (4) and on a side of the root section (4) opposite to a free extremity thereof, the tap body (1) being likely to be sectioned in case of an accident by shearing-off in a plane located between said main valve (10) and the free extremity of the root section (4) while leaving at least a portion of said root section (4) engaged in an access hole to the interior of the cylinder,
the root section (4) being provided with a normally closed secondary check valve (24) and the actuating stem (11) having a prolongation extending through a gas or liquid passage of the tap towards the secondary check valve (24) for opening it when the main valve (10) is being opened,
**characterized in that** the root section (4) is provided with a portion (20) having a reduced external diameter extending between the external thread (5) of the root section (4) and the free extremity thereof, and **in that** the secondary check valve (24) is located at the free extremitiy of the reduced diameter portion (20) of the root section (4).

2. Tap according to claim 1, **characterized in that** the passage of the tap body is provided, in the portion of the root section (4) remaining within the access hole of the cylinder when the tap body (1) is sectioned by shearing-off, with an internally threaded portion (31) for attachment of an auxiliary means for opening the check valve (24).

3. Tap according to claim 1 or 2, **characterized in that** the secondary check valve (24) comprises a check ball (25) urged by a spring (26) towards a seat (27) formed at the free extremity of the root section (4) of the tap body (1) and resting on a support (28) attached to a sleeve (22) fixed to said reduced diameter portion (20) of the root section (4) of the tap body (1).

4. Tap according to any one of claims 1 to 3, **characterized in that** the prolongation of the actuating stem (11) is formed by an extension rod (30) attached to a portion of the actuating stem (11) forming the inversed movable seat of the main valve (10).
